# EUROPEAN PATENT APPLICATION

(11) **EP 4 571 409 A1**
(43) Date of publication of application: **18.06.2025**
(21) Application number: 23852200.7
(22) Date of filing: 22.05.2023
(51) Int. Cl.: G02F 1/15, G02F 1/153

(54) **LAMINATE, COMPOSITION, AND METHOD FOR PRODUCING ELECTROCHROMIC DEVICE**

(30) Priority: 08.08.2022 JP 2022126022
(71) Applicant: National Institute for Materials Science, Tsukuba-shi, Ibaraki 305-0047 (JP)
(72) Inventor: HIGUCHI Masayoshi, Tsukuba-shi, Ibaraki 305-0047 (JP); FUJII Yukio, Tsukuba-shi, Ibaraki 305-0047 (JP)
(74) Representative: J A Kemp LLP
(86) International application number: PCT/JP2023/018874
(87) International publication number: WO 2024/034215

(57) **Abstract**

The present invention provides a laminate (300) for production of an electrochromic device, said laminate (300) comprising an electrolyte film (103), a first support film (10) laminated to one surface of the electrolyte film (103), and a second support film (20) laminated to the other surface of the electrolyte film (103), wherein the electrolyte film (103) contains a polymer, an electrolyte, and a first solvent, and has an average thickness of 10-500 µm, and the viscosity at 23°C of a polymer solution obtained by dissolving 2.0 g of the polymer in 50 mL of tetrahydrofuran is 10-50 mPa·s. The polymer may include at least one polymer selected from the group consisting of polymethyl methacrylate (PMMA), polycarbonate (PC), polyethylene oxide (PEO), poly(vinylidene fluoride-co-hexafluoroisopropyl) (PVdF-co-PHFP), polypropylene carbonate (PPC), polyvinyl acetal, and polyacrylonitrile (PAN).

## Description

### TECHNICAL FIELD

The present invention relates to a laminate, a composition, and a method for producing an electrochromic device. More specifically, the present invention relates to a laminate for producing an electrochromic device, a composition for forming an electrolyte film included in the laminate, and a method for producing an electrochromic device using the laminate.

### BACKGROUND ART

The metallo-supramolecular polymer is a coordination polymer obtained by complex formation between a metal ion and an organic ligand, and is colored by charge transfer absorption of a metal complex moiety. The present inventors have discovered that a metallo-supramolecular polymer exhibits reversible electrochromic properties by electrochemical redox of a metal ion (see, for example, Patent Literatures 1 and 2).

Since a metallo-supramolecular polymer can be formed into a film on an electrode substrate by application in the atmosphere, heat resistance is not required for a base material, and a resin base material having flexibility or the like can also be used. Thus, a flexible electrochromic device can be produced. For example, an electrochromic device is expected as a next-generation glass that contributes to reduction of energy consumption for air conditioning of an indoor space such as an office by effective light control of sunlight. When the electrochromic device is flexible, attachment (bonding) and detachment (peeling) with respect to an existing window can be easily performed as necessary.

In the electrochromic device, a layer containing a metallo-supramolecular polymer (i.e., an electrochromic layer) is disposed between a pair of electrode substrates, and coloration and decoloration of the electrochromic layer are controlled by applying a voltage. In order to promote charge transfer between an electrode and an electrochromic layer, an electrolyte layer is provided between the electrode and the electrochromic layer. The electrolyte layer is formed, for example, by applying a gel electrolyte with fluidity or a liquid electrolyte solution at a production site of the electrochromic device. For this reason, it has been demanded to surround the periphery of a region, to which the electrolyte is applied, with a sealant in order to prevent liquid leakage to the periphery.

### CITATION LIST

### PATENT LITERATURE

PATENT LITERATURE 1: JP 5062712 B2
PATENT LITERATURE 2: WO 2019/177160 A

### SUMMARY OF INVENTION

### TECHNICAL PROBLEM

However, when the base material is replaced with a resin base material having flexibility, the adhesiveness and the sealing ability of the sealant greatly decrease, and the risk of liquid leakage increases. This point has been a problem in realization of a flexible electrochromic device. In addition, from the viewpoint of mass production of electrochromic devices, a method capable of more easily and efficiently forming an electrolyte layer has been required.

Therefore, it is an object of the present invention to provide a laminate in which an electrolyte layer (electrolyte film) can be formed more easily and efficiently in the production of an electrochromic device.

### SOLUTION TO PROBLEM

As a result of intensive studies, the present inventors have found that the above object can be achieved by the following configuration.

[1] A laminate for producing an electrochromic device, the laminate comprising an electrolyte film, a first support film laminated on one surface of the electrolyte film, and a second support film laminated on the other surface of the electrolyte film, wherein the electrolyte film comprises a polymer, an electrolyte, and a plasticizer as a first solvent, and has an average film thickness of 10 µm to 500 µm, and a viscosity at 23°C of a polymer solution obtained by dissolving 2.0 g of the polymer in 50 mL of tetrahydrofuran is 10 mPa·s to 50 mPa·s.
[2] The laminate according to [1], wherein the polymer comprises at least one selected from the group consisting of polymethyl methacrylate (PMMA), polycarbonate (PC), polyethylene oxide (PEO), poly(vinylidene fluoride-co-hexafluoroisopropyl) (PVdF-co-PHFP), polypropylene carbonate (PPC), polyvinyl acetal, and polyacrylonitrile (PAN).
[3] The laminate according to [2], wherein the polymer comprises polymethyl methacrylate (PMMA).
[4] The laminate according to any one of [1] to [3], wherein the electrolyte comprises at least one selected from the group consisting of LiClO₄, LiBF₄, LiAsF₆, LiPF₆, LiCF₃SO₃, LiCF₃COO, lithium bis(trifluoromethanesulfonyl)imide (LiTFSI), LiCH₃COO, tetrabutylammonium perchlorate, tetraethylammonium perchlorate, KCl, NaClO₃, NaCl, NaBF₄, NaSCN, KBF₄, Mg(ClO₄)₂, and Mg(BF₄)₂.
[5] The laminate according to any one of [1] to [4], wherein the plasticizer as the first solvent comprises at least one selected from the group consisting of propylene carbonate, ethylene carbonate, dimethyl carbonate, diethyl carbonate, γ-butyrolactone, succinonitrile, dimethyl sulfoxide, N-methyl-2-pyrrolidone, and an ionic liquid.
[6] The laminate according to any one of [1] to [5], wherein the first support film has a film thickness larger than the second support film.
[7] The laminate according to any one of [1] to [6], wherein a surface of the first support film and/or a surface of the second support film in contact with the electrolyte film is formed from a fluorine resin or a silicone resin.
[8] A composition for forming the electrolyte film comprised in the laminate according to any one of [1] to [7], wherein the composition comprises the polymer, the electrolyte, the plasticizer as the first solvent, and a second solvent, and a viscosity at 23°C of the composition is 250 mPa·s to 7,400 mPa·s.
[9] The composition according to [8], wherein a viscosity of the composition is 250 mPa·s to 300 mPa·s.
[10] The composition according to [8] or [9], wherein the second solvent comprises at least one selected from the group consisting of acetonitrile, acetone, ethyl acetate, and tetrahydrofuran.
[11] A method for producing an electrochromic device, the method comprising preparing the laminate according to any one of [1] to [7], forming an electrochromic layer, the electrochromic layer comprising a metallo-supramolecular polymer formed by alternately connecting a metal cation and an organic ligand through a coordinate bond, on a first electrode substrate, forming a counter electrode layer on a second electrode substrate, peeling the second support film from the laminate to expose the other surface of the electrolyte film, bonding the exposed other surface of the electrolyte film to the counter electrode layer on the second electrode substrate, peeling the first support film from the electrolyte film bonded to the counter electrode layer to expose the one surface of the electrolyte film, and bonding the exposed one surface of the electrolyte film to the electrochromic layer on the first electrode substrate.
[12] The method for producing an electrochromic device according to [11], wherein the counter electrode layer comprises a metal hexacyanoferrate represented by a formula: M(II)₃[Fe(III)CN₆]₂ (wherein M is at least one selected from Fe, Ni, and Zn).

### ADVANTAGEOUS EFFECTS OF INVENTION

The laminate of the present invention enables an electrolyte layer (electrolyte film) to be more easily and efficiently formed in the production of an electrochromic device.

In addition, even in a case where a resin base material having flexibility is adopted for an electrode substrate in the electrochromic device, the risk of liquid leakage of the electrolyte to the surroundings can be almost eliminated by using the laminate of the present invention for the production of the electrochromic device.

### BRIEF DESCRIPTION OF DRAWINGS

[FIG. 1] FIG. 1 is a schematic cross-sectional view of a laminate of one embodiment.
[FIG. 2] FIG. 2 is a schematic cross-sectional view of an electrochromic device of one embodiment.
[FIG. 3] FIG. 3 is a flowchart for illustrating a method for producing a laminate of one embodiment and a method for producing an electrochromic device using the laminate.
[FIG. 4] FIG. 4 is a view for illustrating a method for producing a laminate of one embodiment.
[FIG. 5A] FIG. 5A is a view for illustrating a method (first half) for producing an electrochromic device of one embodiment.
[FIG. 5B] FIG. 5B is a view for illustrating the method (second half) for producing an electrochromic device of the embodiment shown in FIG. 5A.
[FIG. 6] FIG. 6 is a schematic cross-sectional view of a laminate of one embodiment (i.e., an example in which an adhesive is used).
[FIG. 7] FIG. 7 is photographs showing a color change (upper view: purple, lower view: transparent) by electrochemical redox of an electrochromic device produced in Examples 1-1 to 1-4.

### DESCRIPTION OF EMBODIMENTS

Hereinafter, the present invention will be described in detail.

The following description of the requirements of the present invention may be made based on typical embodiments of the present invention, but the present invention is not limited to such embodiments. Some elements of one specific embodiment described below and some elements of another specific embodiment can be arbitrarily combined within the scope of the present invention, or as long as a desired effect(s) can be exhibited.

In the present description, a numerical range represented by using "to" means a range including numerical values described before and after "to" as a lower limit value and an upper limit value.

### [Laminate]

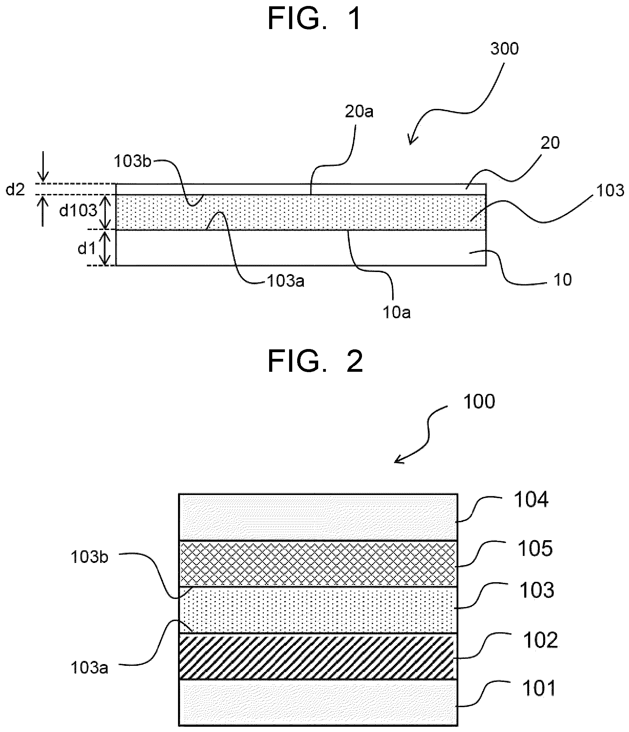

As shown in FIG. 1, a laminate 300 according to an embodiment of the present invention includes an electrolyte film 103, a first support film 10 laminated on one surface 103a of the electrolyte film 103, and a second support film 20 laminated on the other surface 103b of the electrolyte film 103. The laminate 300 is used for producing an electrochromic device (for example, an electrochromic device 100 in FIG. 2 described later).

Here, although not particularly limited, the first support film 10 is preferably laminated directly on one surface 103a of the electrolyte film 103, and/or the second support film 20 is preferably laminated directly on the other surface 103b of the electrolyte film 103.

The electrolyte film 103 contains a polymer, an electrolyte (supporting electrolyte), and a plasticizer (first solvent). In the electrolyte film 103, the electrolyte is dissolved in a plasticizer, ionized, and dispersed in the polymer (matrix). The plasticizer penetrates between polymer molecular chains, weakens the intermolecular force, and plasticizes the polymer (imparts elasticity to the polymer). Then, the electrolyte ions move together with the plasticizer between the polymer molecular chains, whereby charge transfer in the electrolyte film 103 becomes possible.

The polymer contained in the electrolyte film 103 is not particularly limited, and may be appropriately selected within a range in which a desired effect(s) may be exhibited. Examples of the polymer include polymethyl methacrylate (PMMA), polycarbonate (PC), polyethylene oxide (PEO), poly(vinylidene fluoride-co-hexafluoroisopropyl) (PVdF-co-PHFP), polypropylene carbonate (PPC), polyvinyl acetal, and polyacrylonitrile (PAN). Among them, polymethyl methacrylate (PMMA) is preferable from the viewpoint of having high transparency, and polycarbonate (PC) is preferable from the viewpoint of having high heat resistance. One of these polymers may be used alone or two or more of these polymers may be used in admixture.

The polymer contained in the electrolyte film 103 has a characteristic that a viscosity at 23 °C of a polymer solution obtained by dissolving 2.0 g of the polymer in 50 mL of tetrahydrofuran is 10 mPa·s to 50 mPa·s. The viscosity of the polymer solution depends on the molecular weight of the polymer. The viscosity of the polymer solution tends to increase as the molecular weight increases, and the viscosity of the polymer solution tends to decrease as the molecular weight decreases. The viscosity at 23°C of the polymer solution obtained by dissolving 2.0 g of the polymer in 50 mL of tetrahydrofuran may be preferably 15 mPa·s to 45 mPa·s, more preferably 20 mPa·s to 40 mPa·s, still more preferably 20 mPa·s to 35 mPa·s, and most preferably 25 mPa·s to 30 mPa·s.

When the viscosity of the polymer solution is within the above range, the laminate 300 having both good film formability and good transferability can be obtained.

In particular, when the viscosity of the polymer solution is equal to or more than the lower limit value of the above range, for example, occurrence of fine roughness (orange peel) and drying unevenness on the surface of the electrolyte film 103 can be prevented, and occurrence of a phenomenon such as crystallization and precipitation of the contained electrolyte can be prevented, so that a more uniform film can be obtained (the film formability can be improved).

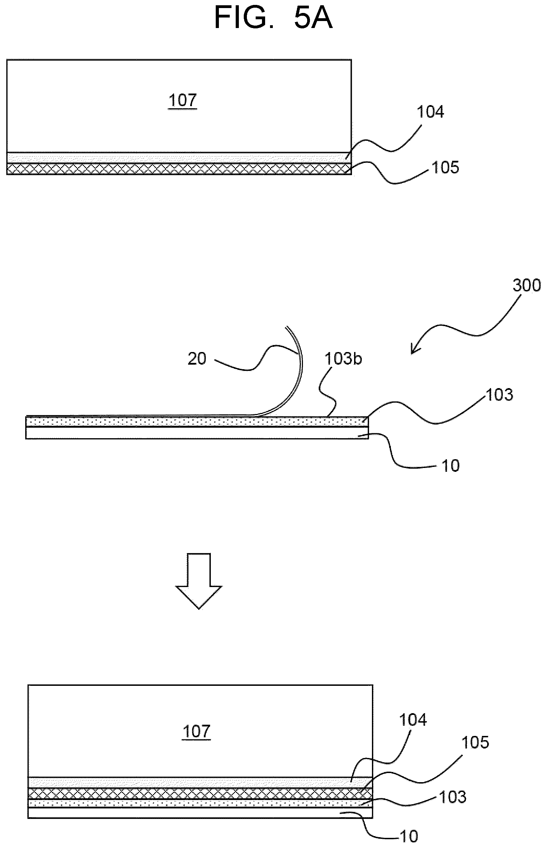

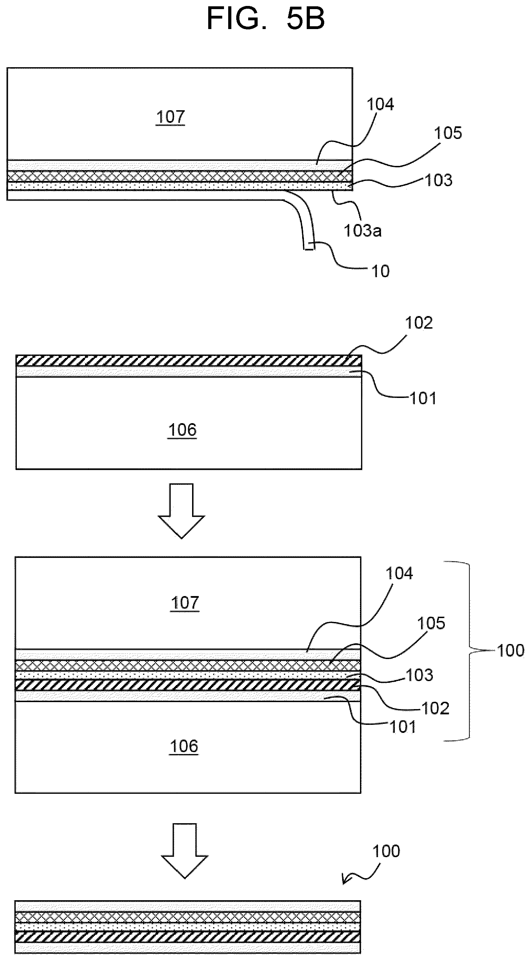

In addition, although details will be described later, in the production of the electrochromic device 100, the electrolyte film 103 in a state in which the first support film 10 and the second support film 20 are removed (peeled off) is transferred onto an electrode substrate (for example, on the counter electrode layer 105 on the second electrode substrate 104) (see FIGs. 5A and 5B described later). At this time, when the viscosity of the polymer solution is equal to or more than the lower limit value of the above range, the electrolyte film 103 is completely peeled from the first support film 10 and/or the second support film 20 without collapse of a part of the electrolyte film 103 at the time of peeling, and as a result, peeling can be conducted successfully without generating a defective portion in the transferred electrolyte film 103, without generating a wrinkle in the transferred electrolyte film 103, and without generating air bubbles between the transferred electrolyte film 103 and a layer adjacent thereto (the transferability can be improved).

With an electrochromic device using such an electrolyte film 103 having improved film formability and/or improved transferability, sufficient electrochromic properties can be obtained (the excellent properties of the device can be achieved).

On the other hand, the electrolyte film 103, in the forming process, usually requires to dissolve the polymer in a solvent (second solvent), but when the viscosity of the polymer solution is equal to or less than the upper limit value of the above range, a sufficient amount of the polymer can be dissolved in the solvent. As a result, the electrolyte film 103 containing a desired amount of the polymer can be formed.

The electrolyte is not particularly limited as long as it is an ionizable compound (for example, a salt), and examples thereof include LiClO₄, LiBF₄, LiAsF₆, LiPF₆, LiCF₃SO₃, LiCF₃COO, lithium bis(trifluoromethanesulfonyl)imide (LiTFSI), LiCH₃COO, tetrabutylammonium perchlorate, tetraethylammonium perchlorate, KCl, NaClO₃, NaCl, NaBF₄, NaSCN, KBF₄, Mg(ClO₄)₂, and Mg(BF₄)₂. Among them, lithium perchlorate (LiClO₄) is preferable from the viewpoint of ion conductivity and ease of handling. These electrolytes effectively function as a counter anion of the metallo-supramolecular polymer contained in the electrochromic layer (for example, layer 102 in FIG. 2). That is, the electrolyte layer has a function to compensate for the charge (referred to as charge compensation function) with respect to a change in valence associated with the redox reaction of a metal ion in the metallo-supramolecular polymer in the electrochromic layer. As the electrolyte, one type may be used alone or two or more of types may be used in admixture.

The plasticizer (first solvent) is liquid at normal temperature. Examples of the plasticizer include propylene carbonate (PC), ethylene carbonate, dimethyl carbonate, diethyl carbonate, γ-butyrolactone, succinonitrile, dimethyl sulfoxide, N-methyl-2-pyrrolidone, and an ionic liquid. Examples of the ionic liquid include a combination of at least one anion selected from the group consisting of tetrafluoroborate, hexafluorophosphate, bis(trifluoromethanesulfonyl)imide, and bis(pentafluoroethylsulfonyl)imide and at least one cation selected from the group consisting of imidazolium, pyrrolidinium, and tetraalkylammonium. Among them, propylene carbonate (PC) is preferable as the plasticizer from the viewpoint of price and safety. As the plasticizer, one type may be used alone or two or more of types may be used in admixture. Use of the plasticizer not only facilitates the application of the coating liquid for forming the electrolyte film, but also prevents crystallization of the above-described polymer (polymer matrix) constituting the electrolyte film 103, and can **prevent** a decrease in response speed.

The amount of each component or the ratio between the components in the electrolyte film 103 is not particularly limited, and can be appropriately adjusted within a range in which a desired effect(s) may be exhibited. The amount of each component or the ratio between the components may be, for example, within the following ranges: with respect to 100 mass% of the entire electrolyte film, the sum of the amounts of the polymer (A), the electrolyte (B), and the plasticizer (C) (A + B + C) is 50 to 100 mass%, and the amount of the polymer (A) is 10 mass% to 80 mass%; or the mass ratio of the electrolyte (B) to the polymer (A) (B/A) is 0.1 to 2, and/or the mass ratio of the plasticizer (C) to the polymer (A) (C/A) is 0.5 to 5.

The electrolyte film 103 may be formed only of a polymer, an electrolyte, and a plasticizer, or may contain other optional component(s) such as a solvent (for example, a second solvent described later) different from the plasticizer (first solvent) within a range in which a desired effect(s) may be exhibited. In addition, the electrolyte film 103 may contain a colorant as another component in order to improve the contrast of the electrochromic device in which the electrolyte film is used.

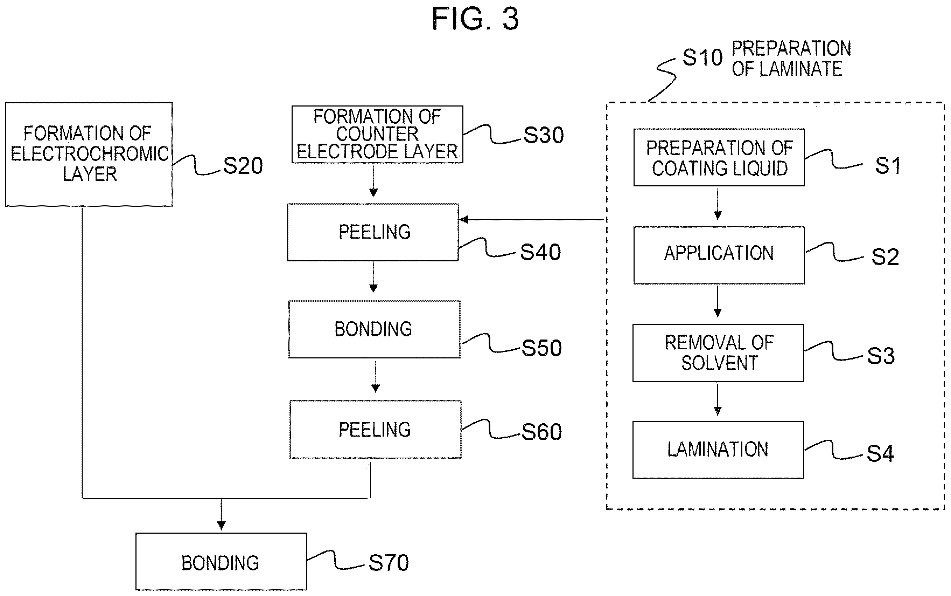

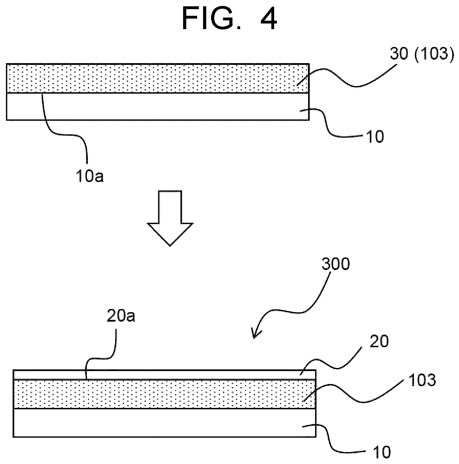

The electrolyte film 103 can be formed by removing the solvent (second solvent) from a coating film 30 of a composition (coating liquid) containing the polymer, the electrolyte, the plasticizer (first solvent), and the solvent (second solvent) (see FIGs. 3 and 4 described later). When an electrochromic device is produced by using the laminate 300 including such an electrolyte film 103, a solvent removal step at the production site of the electrochromic device can be omitted, by which the production of the electrochromic device can be made more efficient. The content of the solvent (second solvent) in the electrolyte film 103 may be, for example, 50 mass% or less or 40 mass% or less.

The thickness (average film thickness) d103 of the electrolyte film 103 is 10 µm to 500 µm, and preferably may be 50 µm to 100 µm. The average film thickness here can be obtained as an average of thickness at least 10 arbitrary locations. When the thickness of the electrolyte film 103 is equal to or more than the lower limit value of the above range, the handleability can be improved, and on the other hand, when the thickness is equal to or less than the upper limit value of the above range, it can become easy to remove the solvent (second solvent) from the electrolyte film 103. The average film thickness d103 of the electrolyte film 103 can be measured by, for example, the measurement method used in examples.

The first support film 10 and the second support film 20 are not particularly limited as long as they are resin films having flexibility, and for example, polyethylene terephthalate (PET), polypropylene (PP), or the like can be used. The first support film 10 and the second support film 20 are peeled from the electrolyte film 103 at the production site of the electrochromic device. Therefore, from the viewpoint of ease of peeling, it is preferable that the surface 10a of the first support film 10 and/or the surface 20a of the second support film 20 in contact with the electrolyte film 103 is formed to contain a release agent such as a fluorine resin or a silicone resin. Therefore, for example, it is preferable that the entire first support film 10 and/or the entire second support film 20 is formed of a release agent such as a fluorine resin or a silicone resin, or it is preferable that the first support film 10 and/or second support film 20 contains a release agent layer such as a fluorine resin layer or a silicone resin layer in the surface portion. The first support film 10 and the second support film 20 may be made of the same material or different materials.

The first support film 10 and the second support film 20 may have the same thickness (d1 = d2), or the first support film 10 may be thicker than the second support film 20 (d1 > d2). Here, the thickness of each of the first support film 10 and the second support film 20 refers to an average thickness, and can be determined as an average of thickness at at least 10 arbitrary locations. When the first support film 10 is thicker than the second support film 20, for example, the following advantages are obtained. In the production of the electrochromic device, initially, the second support film 20 is peeled from the electrolyte film 103 to expose the other surface 103b of the electrolyte film 103, and the surface 103b is bonded to the counter electrode layer 105 on the second electrode substrate 104. At the time of bonding, the thicker the first support film 10 supporting the electrolyte film 103 is, the easier the handling is to improve the work efficiency. In addition, there is a tendency that a thinner film can be peeled off with a smaller force, and therefore the second support film 20 to be peeled off initially is preferably thinner. Further, as shown in FIG. 4, in the production of the laminate 300, first, the electrolyte film 103 is formed on the first support film 10, and then the second support film is laminated. Also in the production of the laminate 300, the thicker the first support film 10 is, the more the handleability and the work efficiency are improved.

For example, the thickness d1 of the first support film 10 may be 1 to 10 times or 1 to 5 times the thickness d2 of the second support film (d1/d2 = 1 to 10 or 1 to 5). In addition, the thickness d1 of the first support film 10 may be, for example, 10 µm to 500 µm or 30 µm to 200 µm, and/or the thickness d2 of the second support film 20 may be, for example, 10 µm to 300 µm or 30 µm to 200 µm. When any one of the thicknesses d1 and d2 and the ratio (d2/d1), or preferably two or three of them are within the above ranges, the work efficiency is further improved in the production of the electrochromic device and the production of the laminate 300.

The peeling load (P1) when the first support film 10 is peeled from the electrolyte film 103 is preferably larger than the peeling load (P2) when the second support film 20 is peeled from the electrolyte film 103 (P1 > P2). As described above, in the production of the electrochromic device, only the second support film 20 is initially peeled off while the first support film 10 is left. At this time, when the peeling loads have the above magnitude relationship (P1 > P2), it is easy to peel only the second support film 20 while leaving the first support film 10. Further, also in the production of the laminate 300, when the peeling load (P2) for the first support film 10 is large to some extent (that is, when peeling is difficult), the electrolyte film 103 is easily held stably on the first support film 10, and the work efficiency is improved. The peeling load can be adjusted by, for example, the materials, configurations, thicknesses, etc. of the first and second support films 10 and 20. The peeling load for the first support film 10 may be, for example, in the range of from 100 mN/50 mm width to 300 mN/50 mm width, and/or the peeling load for the second support film 20 may be, for example, in the range of from 10 mN/50 mm width to 50 mN/50 mm width.

### [Method for producing laminate]

A method for producing the laminate 300 is not particularly limited. An example of the method for producing the laminate 300 will be described below with reference to FIGs. 3 and 4.

The method for producing the laminate 300 may include, for example, the following steps shown in FIG. 3:
step S1: preparing a coating liquid (a composition for forming an electrolyte film);
step S2: applying the coating liquid to the first support film 10;
step S3: removing a solvent (second solvent) from the coating film; and
step S4: laminating the second support film 20.

Firstly, a coating liquid (a composition for forming an electrolyte film) containing a polymer, an electrolyte, a plasticizer (first solvent), and a solvent (second solvent) is prepared (step S1 in FIG. 3). As the polymer, the electrolyte, and the plasticizer, the embodiments already described can be used. The solvent (second solvent) is hereinafter sometimes simply referred to as "solvent".

The solvent (second solvent) is a solvent different from the plasticizer (first solvent), and is not particularly limited as long as it is a solvent capable of dissolving the polymer and the electrolyte. The solvent preferably has a boiling point lower than that of the plasticizer (first solvent) so as to be easily removed in step S3. Examples of the solvent (second solvent) include acetonitrile, acetone, ethyl acetate, and tetrahydrofuran, and among them, acetonitrile is preferable from the viewpoint of solubility of the resin. As the solvent, one type may be used alone or two or more of types may be used in admixture.

The coating liquid may be formed of only a polymer, an electrolyte, a plasticizer, and a solvent, or may contain other optional components such as a colorant within a range in which a desired effect(s) can be exhibited.

The viscosity at 23°C of the coating liquid (the composition for forming an electrolyte film) may be, for example, 250 mPa·s to 7,400 mPa·s or 250 to 300 mPa·s. When the viscosity of the coating liquid is within the above range, coating can be facilitated, and the film formability can be also improved. In particular, when the viscosity at 23°C of the coating liquid is 250 to 300 mPa·s, the tackiness (stickiness) of the obtained electrolyte film 103 can be reduced to a low level, and thus the handling can be easy.

The amount of each component in the coating liquid is not particularly limited, and may be appropriately adjusted so that the concentration of the coating liquid at 23°C falls within the above range. The amount (concentration) of each component in the coating liquid may be, for example, in the following range. The amount of the polymer: 2 to 20 mass%, the amount of the electrolyte: 1 to 10 mass%, the amount of the plasticizer (first solvent): 5 to 50 mass%, and the amount of the solvent (second solvent): 50 to 90 mass% with respect to 100 mass% of the entire coating liquid. Furthermore, the mass ratio (B/A) of the electrolyte (B) to the polymer (A) and/or the mass ratio (C/A) of the plasticizer (C) to the polymer (A) may be similar to each ratio in the electrolyte film 103 described above.

A method for preparing the coating liquid is not particularly limited, and the coating liquid may be prepared by uniformly mixing a polymer, an electrolyte, a plasticizer, a solvent, and if necessary, other components (optional components) by a known method. The mixing order is not particularly limited, but for example, firstly, (1) the polymer (for example, a powder) may be dissolved in a mixed liquid of the solvent and the plasticizer, and (2) the electrolyte and optional components may be added to the obtained polymer solution, followed by further mixing (for example, stirring). According to the above procedure, a uniform coating liquid can be efficiently prepared.

Subsequently, a coating liquid is applied to the surface 10a of the first support film 10 (step S2 in FIG. 3) to form the coating film 30 (FIG. 4). An application method is not particularly limited, and for example, a doctor blade, a bar coater, etc. can be used. The film thickness of the coating film 30 may be appropriately adjusted so that the final film thickness d103 of the electrolyte film 103 becomes the above-described predetermined thickness. By applying the coating liquid to the first support film 10 having a thickness larger than that of the second support film 20, it is possible to obtain an advantage that the handleability in the subsequent steps can be improved.

Subsequently, the solvent (second solvent) is removed from the coating film 30 (step S3 in FIG. 3) to obtain the electrolyte film 103 (FIG. 4). A method for removing the solvent is not particularly limited, and for example, the coating film 30 may be dried (solvent is evaporated) at room temperature, or drying may be accelerated by heating (warming) and blowing air. The drying temperature of the coating film 30 may be set to, for example, room temperature to about 80°C, and the drying time may be set to, for example, about 5 to 120 minutes. The content of the solvent (second solvent) in the electrolyte film 103 after drying may be, for example, 0 mass% or more and 50 mass% or less or 40 mass% or less.

Subsequently, the second support film 20 is laminated on the electrolyte film 103 in a direction in which the surface 20a is in contact with the electrolyte film 103 to obtain the laminate 300 (step S4 in FIG. 3). The obtained laminate may be cut to a desired size.

The laminate 300 described above can be used for producing an electrochromic device, and thereby the electrolyte layer (electrolyte film) can be formed more easily and efficiently. A production method according to an embodiment for an electrochromic device will be described below.

### [Method for producing electrochromic device]

### <Electrochromic Device>

Firstly, an electrochromic device that can be produced using the laminate 300 will be described. FIG. 2 shows the electrochromic device 100 as an example. The electrochromic device 100 includes a substrate that includes one electrode of a pair of electrodes disposed to face each other (a first electrode substrate 101 including a first electrode); an electrochromic layer 102 that contains a metallo-supramolecular polymer and that is disposed on one electrode (first electrode); a substrate that includes the other electrode of the pair of electrodes (a second electrode substrate 104 including a second electrode) and that is disposed above the electrochromic layer 102; an electrolyte layer (electrolyte film) 103 that is disposed between the second electrode substrate 104 and the electrochromic layer 102; and a counter electrode layer 105 that is disposed between the electrolyte layer 103 and the second electrode substrate 104. The electrolyte layer 103 is composed of the electrolyte film 103 included in the laminate 300. In the electrochromic device 100, the first electrode (101) and the electrochromic layer 102 function as working electrodes. Furthermore, the second electrode (104) and the counter electrode layer 105 function as counter electrodes.

The operation of the electrochromic device 100 will be described. The first electrode of the first electrode substrate 101 and the second electrode of the second electrode substrate 104 are connected to a power supply (not shown), and a predetermined voltage is applied to the electrochromic layer 102, the electrolyte layer 103, and the counter electrode layer 105. Thus, the redox of the metallo-supramolecular polymer in the electrochromic layer 102 can be controlled. More specifically, the redox reaction of the metal cation of the metallo-supramolecular polymer in the electrochromic layer 102 can be controlled by applying a predetermined voltage. As a result, the coloration and decoloration of the electrochromic device can be controlled.

The electrochromic device can be applied to a light control device, a display device (display element), etc. When the electrochromic device 100 is used as a light control device, it is preferable that both the first electrode substrate 101 and the second electrode substrate 104 can transmit external light (transparent or with high transmittance). When the electrochromic device 100 is used as a display device, at least one of the first electrode substrate 101 and the second electrode substrate 104 may be transparent (or have high transmittance) to visible light. In the display device, it is preferable that the transparent electrode substrate side is a viewing side.

### <Method for producing electrochromic device>

The method for producing the electrochromic device 100 may include, for example, the following steps shown in FIG. 3:
step S10: preparing the laminate 300;
step S20: forming the electrochromic layer 102 on the first electrode substrate 101;
step S30: forming the counter electrode layer 105 on the second electrode substrate 104;
step S40: peeling the second support film 20 from the laminate 300;
step S50: bonding the exposed other surface 103b of the electrolyte film 103 to the counter electrode layer 105 on the second electrode substrate 104;
step S60: peeling the first support film 10 from the electrolyte film 103; and
step S70: bonding the exposed one surface 103a of the electrolyte film 103 to the electrochromic layer 102 on the first electrode substrate 101.

Firstly, the laminate 300 is prepared (step S10 in FIG. 3). The laminate 300 may be produced, for example, by the production method including the above-described steps S1 to S4.

Subsequently, the electrochromic layer 102 is formed on the first electrode substrate 101 (step S20 in FIG. 3). The first electrode substrate 101 includes a base material and a first electrode formed thereon. Examples of the base material include, but are not particularly limited to, a glass substrate and a resin base material. The production method using the laminate 300 is particularly suitable when the base material is a resin base material having flexibility. Examples of the material of the resin base material having flexibility include polyethylene terephthalate (PET) and polypropylene (PP). The thickness of the first electrode substrate 101 is preferably, for example, 10 µm to 500 µm or 30 µm to 200 µm.

The first electrode is preferably a transparent conductive film (transparent electrode) made of, for example, an SnO₂ film, an In₂O₃ film, or an ITO (Indium Tin Oxide) film which is a mixture of In₂O₃ and SnO₂. The first electrode may be formed on the base material by a known method.

When a resin base material having flexibility is used for the first electrode substrate 101, the first electrode substrate 101 may be supported by the first support plate 106 as shown in FIG. 5B in order to improve the handleability. For example, the first electrode substrate 101 is supported by the first support plate 106 (for example, a glass plate) via an adhesive film (not shown), and the electrochromic layer 102 is formed on the first electrode substrate 101 in that state.

The electrochromic layer 102 contains a metallo-supramolecular polymer formed by alternately connecting a metal cation and an organic ligand through a coordinate bond. The electrochromic layer 102 may be formed by using, for example, a material and a forming method disclosed in the patents and patent publication listed below. The contents described in the following patents and patent publication are incorporated herein by reference. JP 5062712 B2 (Patent Literature 1), WO 2019/177160 A (Patent Literature 2), JP 6758729 B2, and JP 6713175 B2.

The metal cation contained in the metallo-supramolecular polymer is preferably a transition metal and/or a lanthanoid metal. Specific examples of the metal include iron (Fe), cobalt (Co), nickel (Ni), copper (Cu), zinc (Zn), ruthenium (Ru), rhodium (Rh), palladium (Pd), silver (Ag), osmium (Os), iridium (Ir), platinum (Pt), gold (Au), europium (Eu), and terbium (Tb). The organic ligand preferably contains, for example, a terpyridyl group, a bipyridyl group, a pyridyl group, a phenanthrolyl group, an acetylacetonato group, or a derivative thereof. As the metallo-supramolecular polymer, a commercially available product may be used, or it may be synthesized in-house. Further, the electrochromic layer 102 may further contain a counter anion of the metallo-supramolecular polymer. The counter anion is not particularly limited, and examples thereof include an acetate ion, a phosphate ion, a chlorine ion, a phosphorus hexafluoride ion, a boron tetrafluoride ion, a perchlorate ion, a triflate ion, and polyoxometalate.

The method for forming the electrochromic layer 102 is not particularly limited, and typical examples thereof include a method in which a composition (coating material) containing a solvent is prepared and applied onto the first electrode to form the electrochromic layer. Examples of the solvent include polar solvents such as methanol and ethanol. Examples of the application method include spin coating, spray coating, and dip coating. In addition, a sheet of the electrochromic layer may be prepared, and the sheet may be directly bonded onto the first electrode. Spray coating is preferable from the viewpoint that a thin and uniform coating film can be easily formed. Preferable conditions (application conditions) of the spray coating of the electrochromic layer 102 are, for example, as follows. Discharge amount: 0.1 mL/min to 10 mL/min, head speed: 10 mm/sec to 200 mm/sec, coating pitch: 0.1 mm to 5 mm, number of repetitions: 1 to 10, coating temperature (stage temperature of spray coater): room temperature to 80°C.

The counter electrode layer 105 is formed on the second electrode substrate 104 (step S30 in FIG. 3). The second electrode substrate 104 includes a base material and a second electrode formed thereon. As the base material and the second electrode, ones similar to those of the first electrode substrate 101 described above can be used. In addition, when a resin base material having flexibility is used for the second electrode substrate 104, the second electrode substrate 104 may be supported by the second support plate 107 as shown in FIG. 5A in order to improve the handleability. For example, the second electrode substrate 104 is supported by the second support plate 107 (for example, a glass plate) via an adhesive film (not shown), and the counter electrode layer 105 is formed on the second electrode substrate 104 in that state.

The counter electrode layer 105 may be formed by, for example, a material and a forming method disclosed in WO 2019/177160 A (Patent Literature 2). The contents described in Patent Literature 2 are incorporated herein by reference. The counter electrode layer 105 is preferably a metal complex-based electrochromic film, and may be, for example, a film of a metal hexacyanoferrate (MHCF) represented by a formula: M(II)₃[Fe(III)CN₆]₂ (wherein M is at least one selected from Fe, Ni, and Zn). The combination of a working electrode containing a metallo-supramolecular polymer with a counter electrode including a counter electrode layer containing these specific materials allows the electrochromic device 100 to exhibit a sufficiently low driving voltage or operating potential.

The method for forming the counter electrode layer 105 is not particularly limited, and typical examples thereof include a method in which a composition (coating material) containing a solvent is prepared and applied onto the second electrode to form the counter electrode layer. Examples of the solvent include water capable of dissolving or dispersing the counter electrode material, and solvents such as methanol and tetrahydrofuran. Examples of the application method include spin coating, spray coating, and dip coating. In addition, a sheet of the counter electrode layer may be prepared, and the sheet may be directly bonded onto the second electrode. Spray coating is preferable from the viewpoint that a thin and uniform coating film can be easily formed. The spray coating conditions (coating conditions) for the counter electrode layer 105 may be equivalent to the preferable conditions (coating conditions) of the spray coating for the electrochromic layer 102 described above.

Subsequently, as shown in FIG. 5A, the second support film 20 is peeled from the laminate 300 to expose the other surface 103b of the electrolyte film 103 (step S40 in FIG. 3). Then, the exposed other surface 103b of the electrolyte film 103 is bonded to the counter electrode layer 105 on the second electrode substrate 104 (step S50 in FIG. 3). At this time, when the second support film 20 is thinner than the first support film 10 (that is, when the first support film 10 is thicker than the second support film 20), the film can be easily peeled off with a smaller force. Even after the second support film 20 is peeled off, the electrolyte film 103 is supported by the relatively thick first support film 10, so that handling is easy.

Subsequently, as shown in FIG. 5B, the first support film 10 is peeled from the electrolyte film 103 to expose one surface 103a of the electrolyte film 103 (step S60 in FIG. 3). Then, the exposed one surface 103a of the electrolyte film 103 is bonded to the electrochromic layer 102 on the first electrode substrate 101 (step S70 in FIG. 3). As a result, the electrochromic device 100 can be obtained.

As shown in FIG. 5B, when the first support plate 106 and the second support plate 107 are used, the first support plate 106 and the second support plate 107 are separated from the electrochromic device 100 after the bonding step (step S70). In the separation step of the first support plate 106 and the second support plate 107, separation (air bubbles) may occur between the electrolyte film 103 and the electrochromic layer 102 and/or the counter electrode layer 105. Therefore, if necessary, the electrochromic device 100 may be subjected to thermal compression bonding to perform defoaming (removing air bubbles).

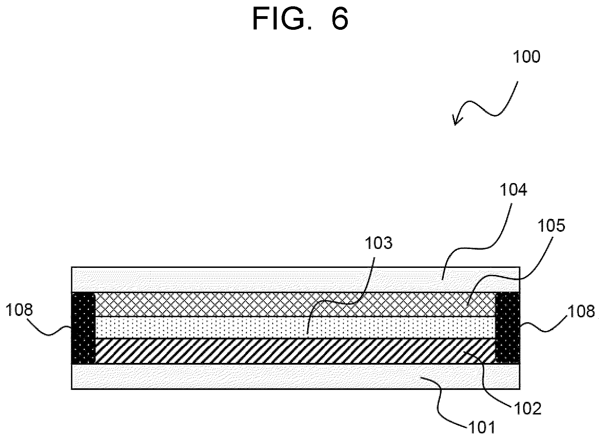

In addition, an adhesive 108 or the like may be used in order to further ensure the close contact between the first electrode substrate 101 and the second electrode substrate 104 (see FIG. 6). As a result, the mechanical strength of the electrochromic device 100 can be improved. For example, the areas of the electrolyte film 103, the electrochromic layer 102, and the counter electrode layer 105 may be adjusted to be smaller than the areas of the first electrode substrate 101 and the second electrode substrate 104, the adhesive 108 may be provided at the outer edge portion of the electrochromic device 100, and the first electrode substrate 101 and the second electrode substrate 104 may be bonded in the bonding step (step S70, see FIG. 3). The adhesive 108 may be provided, for example, on the first electrode and the second electrode (for example, an ITO film) formed on the first electrode substrate 101 and the second electrode substrate 104, respectively. The material of the adhesive 108 is not particularly limited, and a general-purpose adhesive such as an ultraviolet curable epoxy resin or an ultraviolet curable acrylic adhesive can be used.

In the method for producing the electrochromic device 100 using the laminate 300 described above, it is not necessary to form the electrolyte layer 103 by application or the like at a production site. Therefore, in the production site, it is possible to omit a step of preparing a coating material for an electrolyte layer (a gel electrolyte with fluidity or an electrolyte solution), a step of placing a sealant for preventing liquid leakage of the electrolyte to the surroundings, an application step, a drying step, etc. and it is possible to form the electrolyte layer more easily and efficiently. In particular, when a resin base material having flexibility is used for the first electrode substrate 101 and the second electrode substrate 104, the conventional production method including the application step has a problem of liquid leakage of the coating material for the electrolyte layer. On the other hand, at least half to the majority of the solvent (second solvent) has already been removed from the electrolyte film 103 included in the laminate 300, and therefore there is no risk of liquid leakage. In this manner, the laminate 300 is particularly suitable for producing a flexible electrochromic device using a resin base material having flexibility.

In addition, the laminate 300 is easier to store, control quality, transport, etc. than a conventional coating material for forming an electrolyte layer. Further, the produced laminate 300 can be cut to a desired size in advance.

Use of the laminate 300 having the above advantages enables easier and more efficient mass production of an electrochromic device, particularly a flexible electrochromic device. Further, since the laminate 300 has flexibility, it is also possible to produce (mass produce) the electrochromic device 100 by roll-to-roll using the laminate 300.

### EXAMPLES

Hereinafter, the present invention will be described in more detail based on examples. Materials, amounts used, proportions, process operations, process steps, etc. shown in the following examples can be appropriately changed without departing from the spirit of the present invention. Therefore, the scope of the present invention should not be restrictively interpreted by the following examples.

### [Example 1-1]

### 1. Preparation of laminate 300

In this example, the laminate 300 having a configuration shown in FIG. 1 was produced according to the following steps (see FIGs. 3 and 4).

### (1) Preparation of coating liquid (composition for forming electrolyte film)

In this example, a coating liquid was prepared using a polymethyl methacrylate (PMMA) as a polymer, lithium perchlorate (LiClO₄) as an electrolyte, propylene carbonate (PC) as a plasticizer (first solvent), and acetonitrile (ACN) as a solvent (second solvent). A polymer solution in which 2.0 g of PMMA was dissolved in 50 mL of tetrahydrofuran (THF) had a viscosity of 28 mPa·s at 23°C.

Initially, 4 g of a PMMA powder was placed in a 100 mL screw tube, and a mixed liquid of 12 g of PC and 42 g of ACN was poured therein with stirring using a magnetic stirrer to dissolve the PMMA powder in the mixed liquid. Further, 1.8 g of LiClO₄ was added thereto, followed by stirring to obtain a transparent coating liquid. The obtained coating liquid had a viscosity of 7,380 mPa·s at 23°C.

### (2) Application of coating liquid and solvent removal

As the first support film 10, a commercially available PET film with a silicone resin coating layer (manufactured by NIPPA Co., Ltd., product number: J2, thickness: 50 µm, peeling load: 140 mN/50 mm width) was used. The coating liquid was applied to the surface 10a, on which the silicone resin coating layer was provided, of the first support film 10 at a speed of 10 mm/sec using a doctor blade to form a coating film 30. Thereafter, the coating film 30 was dried at room temperature for 120 minutes to remove the solvent (ACN) to form the electrolyte film 103.

### (3) Lamination of second support film 20

As the second support film 20, a PET film with a silicone resin coating layer (manufactured by NIPPA Co., Ltd., product number: JOL, thickness: 50 µm, peeling load: 30 mN/50 mm width) was used. The second support film 20 was laminated on the electrolyte film 103 in such a direction that the surface 20a, on which the silicone resin coating layer was provided, of the second support film 20 was in contact with the electrolyte film 103 to obtain the laminate 300 of this example.

In the produced laminate 300, the average film thickness of the electrolyte film 103 was 80 µm. The average film thickness of the electrolyte film 103 was determined as an arithmetic average value by measurement at arbitrary 10 locations using a dial gauge.

### 2. Production of electrochromic device 100

In this example, the electrochromic device 100 having a configuration shown in FIG. 6 was produced according to the following steps using the produced laminate 300 (see FIGs. 3, 5A, and 5B).

### (1) Formation of electrochromic layer 102

A metallo-supramolecular polymer (Poly(Fe-btpyb) Purple: product code P2789, manufactured by Tokyo Chemical Industry Co., Ltd.) represented by the following formula (1) was dissolved in a solvent (methanol) to prepare a metallo-supramolecular polymer solution at a concentration of 8.4 mg/mL.

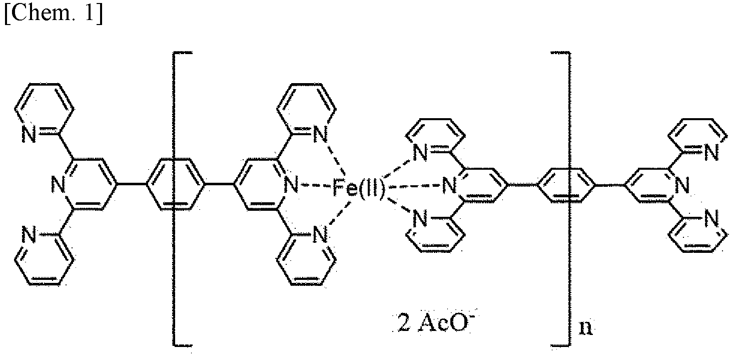

A first electrode substrate 101 (length 100 mm × width 100 mm × thickness 150 µm) in which a PET base material having flexibility was coated with ITO (first electrode) was prepared. The first electrode substrate 101 was supported by a first support plate 106 (i.e., a glass plate with a thickness of 0.7 mm) via a pressure-sensitive adhesive film (not shown) (see FIG. 5B). The electrochromic layer 102 was formed on the first electrode of the first electrode substrate 101 by spray coating with the prepared metallo-supramolecular polymer solution using a spray coater (API40RD, manufactured by API Corporation). Spray coating conditions were as follows: discharge amount: 2 mL/min, head speed: 100 mm/sec, coating pitch: 1 mm, number of repetitions: 2, and stage temperature: 60°C.

### (2) Formation of counter electrode layer 105

An aqueous dispersion (concentration: 0.3 mg/mL) of NiHCF (nickel hexacyanoferrate, Ni(II)₃[Fe(III)CN₆]₂) which is a Prussian blue-nickel derivative was prepared. As the second electrode substrate 104, an electrode substrate having the same configuration as the above-described first electrode substrate 101 was prepared, and supported by a second support plate 107 (i.e., a glass plate with a thickness of 0.7 mm) via a pressure-sensitive adhesive film (not shown) (see FIG. 5A). The counter electrode layer 105 was formed on the second electrode of the second electrode substrate 104 by spray coating with the prepared NiHCF aqueous solution using the same spray coater as the one used for forming the electrochromic layer 102. Spray coating conditions were as follows: discharge amount: 1 mL/min, head speed: 100 mm/sec, coating pitch: 1 mm, number of repetitions: 2, and stage temperature: 80°C.

### (3) Bonding of electrolyte film 103 to counter electrode layer 105

Firstly, the laminate 300 was cut to a size of 9.4 cm × 9.2 cm. The second support film 20 was peeled from the cut laminate 300 to expose the other surface 103b of the electrolyte film 103. Then, the other surface 103b was bonded to the counter electrode layer 105 on the second electrode substrate 104 (see FIG. 5A). Both the area of the electrolyte film 103 and the area of the counter electrode layer 105 were adjusted to be smaller than the area of the second electrode substrate 104. As a result, even after the electrolyte film 103 and the counter electrode layer 105 were bonded to each other, the electrolyte film 103 and the counter electrode layer 105 were not present on the surface of the peripheral portion of the outer edge of the second electrode substrate 104, and a region where the ITO film (second electrode) on the surface of the second electrode substrate 104 was exposed was present. An ultraviolet curable acrylic adhesive (XVL-90T3 manufactured by Kyoritsu Chemical & Co., Ltd.) 108 was applied to this region by printing (the adhesive 108 is not shown in FIG. 5A; see FIG. 6).

### (4) Bonding of electrolyte film 103 to electrochromic layer 102

The area of the electrochromic layer 102 was adjusted to be smaller than the area of the first electrode substrate 101. As a result, a region where the ITO film (first electrode) on the surface of the first electrode substrate 101 was exposed was present on the surface of the peripheral portion of the outer edge of the first electrode substrate 101. When the electrolyte film 103 and the electrochromic layer 102 were bonded to each other, the ultraviolet curable acrylic adhesive 108 applied to the second electrode substrate 104 came into contact with this region (around the electrochromic layer 102), and a good adhesive layer was formed (the adhesive 108 is not shown in FIG. 5B, see FIG. 6).

The first support film 10 was peeled from the electrolyte film 103 to expose one surface 103a of the electrolyte film 103. Then, the surface 103a was bonded to the electrochromic layer 102 on the first electrode substrate 101 (see FIG. 5B). At the same time, the first electrode substrate 101 and the second electrode substrate 104 were bonded to each other via the adhesive 108. Then, the adhesive 108 was cured by being irradiated with an ultraviolet ray from the back surface of the first electrode substrate 101 and the back surface of the second electrode substrate 104 (the adhesive 108 is not shown in FIG. 5B, see FIG. 6). Subsequently, the first support plate 106 and the second support plate 107 were separated from the first electrode substrate 101 and the second electrode substrate 104, respectively, to obtain the electrochromic device 100 of this example. In this example, further, the obtained electrochromic device 100 was subjected to thermal compression bonding with a heating laminator, and air bubbles present inside the device were pushed out.

### [Examples 1-2 to 1-4]

In each of Examples 1-2 to 1-4, the laminate 300 was produced in the same manner as in Example 1-1 except that the formulation of the coating liquid (amounts of components) was changed as shown in Table 1. The viscosity of the coating liquid in each example and the average film thickness of the obtained electrolyte film are shown in Table 1. In Examples 1-2 to 1-4, the electrochromic device 100 was further produced in the same manner as in Example 1-1 using the produced laminate 300.

### [Example 2]

In Example 2, PMMA having a molecular weight different from that in Examples 1-1 to 1-4 was used. The viscosity at 23°C of a polymer solution prepared by dissolving 2.0 g of PMMA used in this example in 50 mL of tetrahydrofuran (THF) was 8.4 mPa·s. Otherwise, the laminate 300 was produced, and then the electrochromic device 100 was produced using this laminate 300 in the same manner as in Example 1-1. The viscosity of the coating liquid and the average film thickness of the obtained electrolyte film are shown in Table 1.

### [Evaluation]

The following evaluations were performed for Examples 1-1 to 1-4 and 2. The results are shown in Table 1.

### 1. Film formability

In the production of the laminate 300 in Examples 1-1 to 1-4 and 2, the film formability of the electrolyte film 103 formed on the first support film 10 was evaluated according to the following evaluation criteria. When the following comprehensive evaluation result of the film formability is A or B, it can be determined that the film formability is good.

In the following evaluation criteria, "smoothness" was evaluated by observing the surface of the electrolyte film 103 through visual inspection.

The "tackiness" was evaluated based on the ease of peeling of the second support film 20 from the electrolyte film 103. The more easily the film is peeled, the smaller the stickiness of the electrolyte film 103 is, and the evaluation of the "tackiness" shall be determined to be high. In the following evaluation criteria, when the evaluation result of "tackiness" is A or B, it can be determined that the fluidity of the electrolyte film 103 is kept low, the self-standing ability of the electrolyte film 103 as a film is high, and handling is easy.

### <Evaluation criteria for film formability>

### (1) Comprehensive evaluation criteria for film formability

A: The evaluation result of smoothness described below is G (good), and the evaluation result of tackiness is A.
B: The evaluation result of smoothness described below is G (good), and the evaluation result of tackiness is B.
C: The evaluation result of smoothness is NG (poor) regardless of the evaluation result of tackiness described below.

### (2) Evaluation criteria for smoothness

G: Any of fine roughness (orange peel) on the surface, drying unevenness, and precipitation (crystallization) of the electrolyte is not observed in the electrolyte film 103.
NG: At least one phenomenon of fine roughness (orange peel) on the surface, drying unevenness, and precipitation (crystallization) of the electrolyte is observed in the electrolyte film 103.

### (3) Evaluation criteria for tackiness

A: When the second support film 20 is peeled off, the stickiness is small, and the shape of the electrolyte film 103 can be maintained in an area of 95% or more.
B: When the second support film 20 is peeled off, the shape of the electrolyte film 103 can be maintained in an area of 95% or more, but the stickiness is slightly high.
C: When the second support film 20 is peeled off, peeling failure occurs in an area exceeding 5%.

### 2. Transferability

In the process for producing the electrochromic devices 100 in Examples 1-1 to 1-4 and 2, after the first support film 10 was peeled from the electrolyte film 103, the electrolyte film 103 transferred onto the counter electrode layer 105 was observed by visual inspection, and the transferability of the electrolyte film 103 was evaluated according to the following evaluation criteria. When the evaluation result is A or B, it can be determined that the transferability is good.

### <Evaluation criteria for transferability>

A: No defective portion, wrinkle, or air bubbles (air bubbles between the electrolyte film 103 and the counter electrode layer 105) are observed in the electrolyte film 103. That is, the area of a region where any of a defective portion, a wrinkle, and air bubbles is present (hereinafter referred to as the "area of a defective region") is 0% of the area of the electrolyte film 103.
B: At least one condition of a defective portion, a wrinkle, and air bubbles is observed in the electrolyte film 103, but the area of the defective region is 10% or less of the area of the electrolyte film 103.
C: The area of the defective region is more than 10% and 50% or less of the area of the electrolyte film 103.
D: The area of the defective region exceeds 50% of the area of the electrolyte film 103.

### 3. Device property

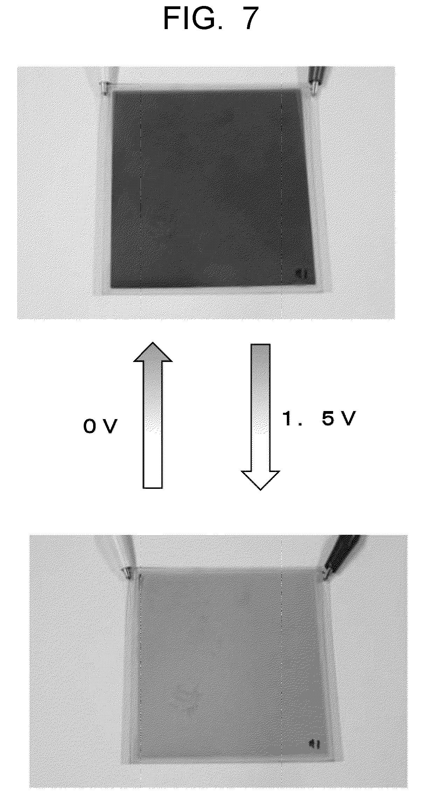

The electrochromic device 100 produced in each of Examples 1-1 to 1-4 was connected to a DC power supply (1.5 V) to perform decoloring/color developing operations. As shown in FIG. 7, it was confirmed that the electrochromic device 100 exhibited a color change from purple (potential: 0 V, reduced state Fe(II)) to colorless (potential: 1.5 V, oxidized state Fe(III)), that is, electrochromic properties (EC properties).

The display state of the device produced in each example was evaluated according to the following evaluation criteria. When the evaluation result is A or B, it can be determined that the device property is good. In the electrochromic device 100, it can be presumed that the existence of a region where the decoloring/color developing operations cannot be observed is caused by the fact that there is a region where at least one condition of a defective portion, a wrinkle, and air bubbles is present in the electrolyte film 103 (i.e., the presence of the area of a defective region).

### <Evaluation criteria of device properties>

A: The area of a region where the decoloring/color developing operations can be observed is 95% or more of the area of the electrochromic device 100.
B: The area of a region where the decoloring/color developing operations can be observed is 80% or more and less than 95% of the area of the electrochromic device 100.
C: The area of the region where the decoloring/color developing operations can be observed is less than 80% of the area of the electrochromic device 100.
D: Because the transferability of the electrolyte film 103 is poor (transferability evaluation result: D), assembly of an electrochromic device is impossible ().

**[Table 1]**

| Example | Formulation of coating liquid (composition for forming electrolyte film) | | | | Viscosity of coating liquid (mPa·s) | Average film thickness of electrolyte film (*µ*m) | Evaluation results | | |
|---|---|---|---|---|---|---|---|---|---|
| | Polymer: PMMA (g) [viscosity of THF solution (mPa·s)] | Electrolyte LiClO₄(g) | Plasticizer PC (mL) | Solvent ACN (mL) | | | Film formability | Transferability | Device property |
| 1-1 | 4 [28] | 1. 8 | 12 | 42 | 7380 | 80 | B | B | B |
| 1-2 | 4 [28] | 1.8 | 12 | 84 | 260 | 50 | A | B | B |
| 1-3 | 4 [28] | 1. 8 | 10 | 84 | 260 | 80 | A | A | A |
| 1-4 | 4 [28] | 1.8 | 8 | 86 | 290 | 75 | A | B | B |
| 2 | 4 [8. 4] | 1.8 | 12 | 42 | 70 | 40 | c | D | D |

The meaning of the abbreviations used in the table are as follows.
PMMA: polymethyl methacrylate
LiClO₄: lithium perchlorate
PC: propylene carbonate
ACN: acetonitrile
THF: tetrahydrofuran

As shown in Table 1, in Examples 1-1 to 1-4 where the viscosity at 23°C of the polymer solution in which 2.0 g of the polymer (PMMA) was dissolved in 50 mL of THF was 28 mPa·s, the evaluation results of all of the film formability, the transferability, and the device properties were good. Among them, in Examples 1-2 to 1-4 where the viscosity of the coating liquid (the composition for forming the electrolyte film) was 250 to 300 mPa·s, the evaluation result of the film formability was more excellent (evaluation result of film formability: A).

On the other hand, in Example 2 where the viscosity at 23°C of the polymer solution prepared by dissolving 2.0 g of the polymer (PMMA) in 50 mL of THF was less than 10 mPa·s, both the film formability and the transferability were poor. In addition, since the laminate 300 having sufficient transferability could not be produced, the electrochromic device 100 could not be produced in Example 2 (evaluation result of device properties: D).

It was presumed that one of the reasons for the low film formability in Example 2 was due to that the molecular weight of the polymer was small, and therefore the viscosity of the coating liquid (the composition for forming the electrolyte film) was also low, and the drying of the coating film was accelerated.

In addition, it was presumed that one of the reasons for the low transferability in Example 2 was due to that the molecular weight of the polymer was small, and therefore the tackiness of the electrolyte film 103 was low, and the adhesion to the counter electrode layer 105 could not be sufficiently obtained, and thus the second support film 20 could not be peeled off successfully.

The viscosity of the polymer in these examples was measured as follows. All of the values of the polymer viscosity described in the present description and the appended claims are measured by this method.
· Viscosity measuring device
Brookfield digital viscometer (B-type viscometer) for low viscosity "LVDVE" (manufactured by AMETEK Brookfield, in accordance with JIS Z 8803)
· Viscosity measurement conditions
Probe: LV5, rotation speed: 60 rpm

### INDUSTRIAL APPLICABILITY

When the laminate is used, it is possible to more easily and efficiently form an electrolyte layer (electrolyte film) of an electrochromic device. In addition, even in a case where a resin base material having flexibility is adopted for the electrode substrate in the electrochromic device, by using the laminate of the embodiment for producing the electrochromic device, the risk of liquid leakage of the electrolyte to the surroundings can be almost eliminated. The electrochromic device thus produced can be used for various applications such as a light control glass device and a display device.

### REFERENCE SIGNS LIST

- 10: first support film
- 20: second support film
- 30: coating film
- 100: electrochromic device
- 101: first electrode substrate
- 102: electrochromic layer
- 103: electrolyte layer (electrolyte film)
- 104: second electrode substrate
- 105: counter electrode layer
- 106: first support plate
- 107: second support plate
- 108: adhesive
- 300: laminate

## Claims

1. A laminate for producing an electrochromic device, the laminate comprising:
an electrolyte film;
a first support film laminated on one surface of the electrolyte film; and
a second support film laminated on the other surface of the electrolyte film, wherein
the electrolyte film comprises a polymer, an electrolyte, and a plasticizer as a first solvent, and has an average film thickness of 10 µm to 500 µm, and
a viscosity at 23°C of a polymer solution obtained by dissolving 2.0 g of the polymer in 50 mL of tetrahydrofuran is 10 mPa·s to 50 mPa·s.

2. The laminate according to claim 1, wherein the polymer comprises at least one selected from the group consisting of polymethyl methacrylate (PMMA), polycarbonate (PC), polyethylene oxide (PEO), poly(vinylidene fluoride-co-hexafluoroisopropyl) (PVdF-co-PHFP), polypropylene carbonate (PPC), polyvinyl acetal, and polyacrylonitrile (PAN).

3. The laminate according to claim 2, wherein the polymer comprises polymethyl methacrylate (PMMA).

4. The laminate according to any one of claims 1 to 3, wherein the electrolyte comprises at least one selected from the group consisting of LiClO₄, LiBF₄, LiAsF₆, LiPF₆, LiCF₃SO₃, LiCF₃COO, lithium bis(trifluoromethanesulfonyl)imide (LiTFSI), LiCH₃COO, tetrabutylammonium perchlorate, tetraethylammonium perchlorate, KCl, NaClO₃, NaCl, NaBF₄, NaSCN, KBF₄, Mg(ClO₄)₂, and Mg(BF₄)₂.

5. The laminate according to any one of claims 1 to 4, wherein the plasticizer as the first solvent comprises at least one selected from the group consisting of propylene carbonate, ethylene carbonate, dimethyl carbonate, diethyl carbonate, γ-butyrolactone, succinonitrile, dimethyl sulfoxide, N-methyl-2-pyrrolidone, and an ionic liquid.

6. The laminate according to any one of claims 1 to 5, wherein the first support film has a thickness larger than the second support film.

7. The laminate according to any one of claims 1 to 6, wherein a surface of the first support film and/or a surface of the second support film in contact with the electrolyte film is formed from a fluorine resin or a silicone resin.

8. A composition for forming the electrolyte film comprised in the laminate according to any one of claims 1 to 7,
wherein the composition comprises the polymer, the electrolyte, the plasticizer as the first solvent, and a second solvent, and
a viscosity at 23°C of the composition is 250 mPa·s to 7,400 mPa·s.

9. The composition according to claim 8, wherein a viscosity of the composition is 250 mPa·s to 300 mPa·s.

10. The composition according to claim 8 or 9, wherein the second solvent comprises at least one selected from the group consisting of acetonitrile, acetone, ethyl acetate, and tetrahydrofuran.

11. A method for producing an electrochromic device, the method comprising:
preparing the laminate according to any one of claims 1 to 7;
forming an electrochromic layer, the electrochromic layer comprising a metallo-supramolecular polymer formed by alternately connecting a metal cation and an organic ligand through a coordinate bond, on a first electrode substrate;
forming a counter electrode layer on a second electrode substrate;
peeling the second support film from the laminate to expose the other surface of the electrolyte film;
bonding the exposed other surface of the electrolyte film to the counter electrode layer on the second electrode substrate;
peeling the first support film from the electrolyte film bonded to the counter electrode layer to expose the one surface of the electrolyte film; and
bonding the exposed one surface of the electrolyte film to the electrochromic layer on the first electrode substrate.

12. The method for producing an electrochromic device according to claim 11, wherein the counter electrode layer comprises a metal hexacyanoferrate represented by a formula: M(II)₃[Fe(III)CN₆]₂ (wherein M is at least one selected from Fe, Ni, and Zn).
